## Europäisches Patentamt

## European Patent Office

## Office européen des brevets

(19)

(11) Publication number: **0 087 548**
**B1**

# EUROPEAN PATENT SPECIFICATION

(12)

(45) Date of publication of patent specification: **10.12.86**

(51) Int. Cl.⁴: **E 02 B 15/04**

(21) Application number: **82830042.6**

(22) Date of filing: **01.03.82**

(54) **An apparatus for recovering fluid substances floating on a water surface or the like.**

(43) Date of publication of application:
**07.09.83 Bulletin 83/36**

(45) Publication of the grant of the patent:
**10.12.86 Bulletin 86/50**

(84) Designated Contracting States:
**AT BE CH DE FR GB LI LU NL SE**

(56) References cited:
**EP-A-0 007 891**
**EP-A-0 027 239**
**EP-A-0 032 351**
**CA-A- 959 423**
**DE-A-3 037 784**
**GB-A-1 515 592**

(73) Proprietor: **Ayroldi, Giuseppe**
**Via Guido Zanobini 55**
**I-00175 Roma (IT)**

(72) Inventor: **Ayroldi, Giuseppe**
**Via Guido Zanobini 55**
**I-00175 Roma (IT)**

(74) Representative: **Fiammenghi-Domenighetti,**
**Delfina et al**
**Racheli-Fiammenghi-Fiammenghi Via Quattro**
**Fontane 31**
**I-00184 Roma (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an apparatus adapted for the recovery of fluid substances floating on water surfaces or other calm liquids.

Various types of devices are already known for the recovery of fluid material which floats on calm water surfaces and which can be called of a "dipping" type, as, for instance, a system including disks or rollers rotating about a horizontal axis, or systems including a belt in continuous motion. An example of a "dipping" type recovery apparatus is disclosed in DE—A—3037784.

Said devices are caused to be lapped by the surface layer of the liquid so as to gather the oil layer therefrom which remains sticking to the gathering means and from which the oil is removed by the use of scraping means.

Also known are the apparatus which are called the "weir" type comprising a body substantially of a well-like shape, the edge of which is maintained immersed below the liquid surface at a predetermined level by means of a system of floating bodies supporting the apparatus and through the bottom of which by means of pumps the surface layer of the liquid is removed, which flows over the sill. An example of a "weir" type is disclosed in EP—A—7891.

Said devices of the "dipping" type have, in general, however a very low efficiency, chiefly owing to the poor draw capacity which can be exerted of the outer liquid layer, while those of the "weir" type present also the disadvantage they they remove together with the polluting layer, a considerable amount of water which is necessary later to be separated from the oils with a further working expense.

The present invention provides an apparatus which aims to overcome the aforementioned inconveniences since it presents a much higher draw capacity on the polluted surface layer and is adapted to convey to the stocking tanks an oily polluting material which is practically in an anhydrous state.

The apparatus according to the invention comprises the features defined in claim 1, the prior art part of the claim being based on the disclosure of EP—A—27239.

Substantially the apparatus comprises two longitudinal floating hulls of a symmetrical configuration and which support vertical, transversal, inclined and horizontal walls which form between them a central channel which is closed at its rear and on the bottom and which at its front end ends with an entrance sill. At its central and rear parts the channel forms a calm basin of a considerable depth which extends beyond the floating bodies and/or which may also become larger behind these latter. Beginning from said basin, the channel bottom rises upwardly along a substantially vertical wall and then it extends towards the sill with a very small slope and becomes larger laterally so as to hang out over the floating hulls so that a very large weir sill is available in order to permit to operate on a water band of a width which is greater than the total width of the floating bodies and the interposed channel, thus speeding up the cleaning-up operations on a large water band. At the rear part of the basin a chamber of a predetermined volume is obtained which communicates with said basin by means of an orifice arranged near the bottom of the basin. Said chamber is connected with a first conduit into which a propeller is mounted which rotates at an adjustable speed. This first conduit, downstream of the propeller, leads to a second vertical conduit which extends behind the said chamber and said apparatus and which also partially surrounds the sides of the chamber or of the channel; said conduit opens at a short distance underneath the liquid surface.

Owing to the positioning of such entrance orifice in the chamber, only the water which is contained in the basin will be sucked and which is then expelled through the discharge orifice of said vertical conduit.

An apparatus for removing the oily material is placed at the central part of the calm basin.

This apparatus may be constituted of a series of disks mounted on a transversal revolving shaft and partially immersed in the liquid of the channel, said disks co-operating with oil scrapers in order to remove the oil collected by the disks surfaces. Or an apparatus of a floating type can be used which acts as an oil collecting means of a "weir" type.

The apparatus of the invention has the peculiarity that it is shaped and dimensioned so as to have an operative self-adjusting effect. That means that the forces involved, which act on the apparatus when the propeller is stationary, are such as to maintain the entrance sill lifted at a very small distance above the level of the liquid surface. When the propeller goes into action and the number of its revolutions is adjusted and therefore will be also adjusted the delivery of the water sucked into the chamber and then discharged through the outlet conduit, the apparatus automatically rotates according to the pitching direction, bringing weir sill which serves as access into the channel formed between the floating hulls, to the desired depth, which is determined by the thickness of the oily material which is to be removed. That is obtained, providing such a geometry of the system, that the center of gravity of that part of the water mass which fills the channel, and which is removed when the pumps becomes operative, be shifted backwards as far as possible with respect to the center of gravity of the whole system in its operative condition. It will result thus that, the more the height of the water mass contained in the channel and in the chamber in which operates the propeller diminishes, the more the apparatus weight will decrease, at the part behind its center of gravity. It will cause a rotation in the front of the apparatus, causing the entrance sill to be lowered such that the immersion depth of said sill below the liquid surface is increased as a direct function of the speed of rotation of the propeller. The characteristics that this apparatus must have will now be explained in a more detailed manner, reference being made to the accompanying drawings, in which:

Figure 1 shows a vertical longitudinal sectional view of an apparatus according to the preferred embodiment and in which the oily material is collected by means of a system of a type which includes revolving disks and which operates in the inside of the calm basin;

Figure 2 is a cross-section A—A of Figure 1;

Figure 3 is a top view of the apparatus according to the embodiment of Figures 1 and 2;

Figure 4 shows, in a top view, a variant, in which in the apparatus, according to the preferred embodiment of Figures 1 and 2 is mounted an apparatus for collecting the oil of the so called "weir" type operating inside the calm basin;

Figure 5 diagrammatically shows the sectional view taken on the vertical longitudinal center plane of the apparatus, according to the preferred embodiment, with the representation of the main forces which act thereon during its operation;

Figures 6 and 7 show respectively the top view and the view of the longitudinal side of a channel having a longitudinal triangular section of the simplest embodiment;

Figure 8 shows, in a top view, a first variant of the configuration of the inner channel of a simple type, shown in Figures 6 and 7; and

Figure 9 shows, in a plan view, a channel which enlarges at its rear part so that the center of gravity of the water contained into the apparatus will be displaced further backwards as provided in the preferred embodiment of the present invention, shown in the Figures 1 to 5.

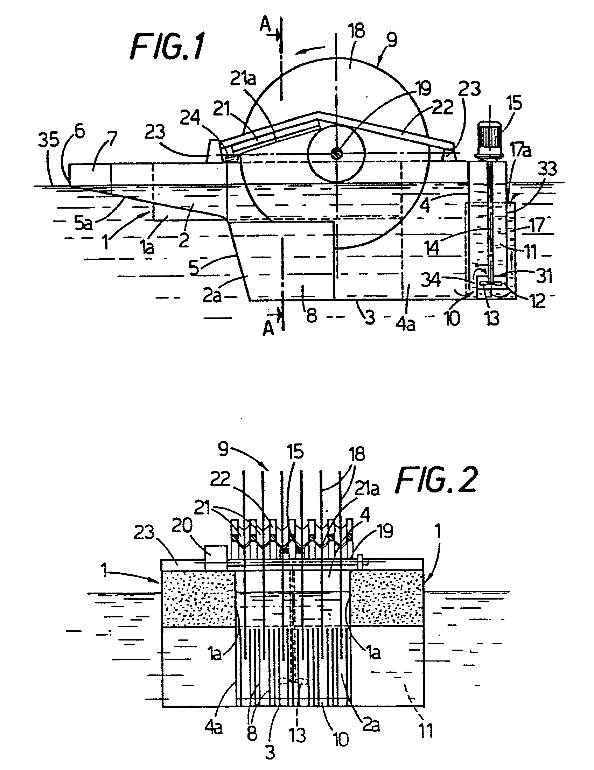

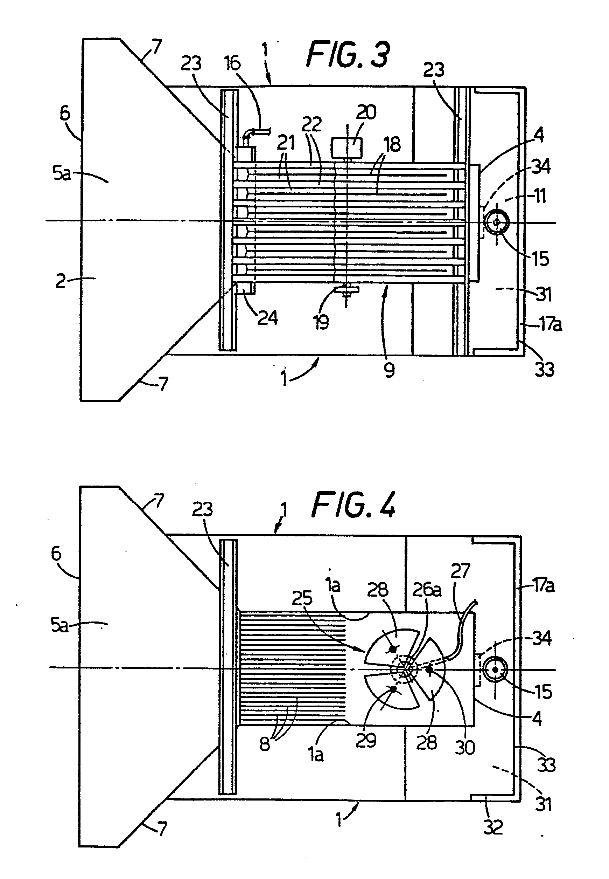

With reference to the drawings and to the preferred embodiment, shown in Figures 1 to 5, the apparatus comprises two longitudinal floating hulls 1 substantially of the same configuration, but symmetrical with respect of the vertical longitudinal center plane of the apparatus and which are made integral with and spaced away from one another by means of walls made of metal sheet or other suitable material, said walls forming between the hulls 1 a longitudinal channel of a depth which increases from the front to the rear end which is closed by a vertical wall 4. Said channel comprises a front section 2 and a central and rear section 2a which forms a deep calm basin. For such a purpose the inner walls of the hulls of floating bodies 1 extend in downward direction by longitudinal walls 4a, reaching the depth of the rear wall 4 and joining with a horizontal bottom 3 which at its front part joins, in turn, with a transversal, slightly bent forward wall 5 which, in turn, joins with a slightly inclined wall 5a which becomes larger as it rises towards the entrance sill 6 of the channel 2, 2a and which projects laterally beyond the floating bodies 1 (Figure 4).

7 indicates the side walls which serve to contain and guide the fluid flow which flows over the sill 6 such that the flow is guided so as to be channelized into the calm basin 2a of the channel 2, 2a. In such a way a very broad weir sill 6 is obtained so as to permit an operation on a water band larger than the maximum width between the outer parts of the floating hulls 1, thus speeding up the cleaning-up operations on the water surface.

Near the front part and the bottom of the calm chamber 2a a plurality of vertical parallel baffles 8 are provided which have the task to brake the movement of the liquid flow which comes out of the channel length 2 into the basin 2a, thus promoting the collection of the oil drops on the surface layer given that the fluid flow can reach into the basin 2a from the first channel length 2 with a certain speed and vorticity. In such a way it is ensured that all the oil drops gather on the surface of the basin 2a, while on the bottom there is only water which will pass so deprived of the polluting material in the chamber 11 positioned behind the basin, that will be described below.

In the first embodiment shown in Figures 1 to 3 the calm basin is separated by means of a transversal wall 4 from a chamber 11 which communicates with the calm basin 2a through an orifice 10 (Figure 1) arranged in said wall 4 near the bottom 3 and which is connected with a conduit 34. The chamber 11 extends laterally, forwards and behind the floating bodies 1 and is formed by a bottom wall 31, side walls 32 and a rear wall 33.

In the bottom 31 of the chamber 11 opens a vertical conduit 12 inside of which is housed a propeller 13 fixed on a vertical shaft 14 driven by a motor unit, generally indicated 15 and which may include a gear box (not shown) and which could be absent in the apparatus which are designed to operate in constant site conditions.

The propeller 13 is prearranged so as to be able to rotate in the direction which permits water to be sucked from chamber 11 and to be conveyed through conduit 12 in a discharge vertical conduit 17, the output orifice 17a of which opens behind the apparatus and at a certain distance below the water surface 35 at a level less than that of the weir sill 6 in all the operative conditions of the apparatus.

According to the first embodiment (Figures 1 to 3) the apparatus is provided with an oil collecting device of a known type, generally indicated 9, and which is formed by a plurality of disks 18 fixed on a common shaft 19 and spaced apart from each other; said shaft receives a rotary movement by a motor unit 20 mounted on one of the floating bodies 1 (Figure 2).

The disks 18 are partially immersed in the water contained in the calm basin 2a, where the oily material tends to gather on the surface and to stick to the disks 18, while the water without oil decants upon the bottom 3 of the basin 2a. The disks 18, which rotate in the direction of the arrow shown in Figure 1, plunge into the oil layer floating on the water in the calm basin 2a, which sticks to the side surfaces of the respective disk 18 under the well known physical effect. The oil layers are then removed from the disks 18 by means of stationary scrapers 21 which consists of inclined wall elements, the edges 21a of which lean with a light friction along the faces of the revolving disk 18, said scrapers being supported by longitudinal beams 22 which pass between the disks 18 and which are carried at their ends by transversal beams 23 supported by the floating bodies 1, while the inner channels which are formed by the wall elements 21 and by the adjacent faces of the disks bring down the oil into a collecting transversal channel 24, which conveys said oil into the pipe conveying away the oil towards a collecting tank or the like (not shown).

The apparatus for the collection of the oil, according to the variant of Figure 4, is of the so called "weir" type and is generally indicated 25. It comprises a collection trap 26 supported by the floating bodies 28, the edge 26a of which floats at a short distance underneath the liquid contained in the calm basin 2a, which edge constitutes the weir sill through which is removed and recovered the oil sucked by a pump (not shown) and which is connected to the bottom of the trap 26 by a flexible hose 27.

Vertical guide rods 29 are provided which are fixed at their lower ends to the bottom 3 of the basin 2a of the channel 2, 2a and which pass through the floating bodies 28 by means of guiding holes 30 designed to maintain the apparatus 25 in true position, so as to permit free up and down movement thereof.

Now the informing principle upon which is based the structure of the apparatus will be described in detail, in order that this latter can be self-floating and which is provided with a sill which can operate to different depths by adjusting the rotation speed of the propeller 13.

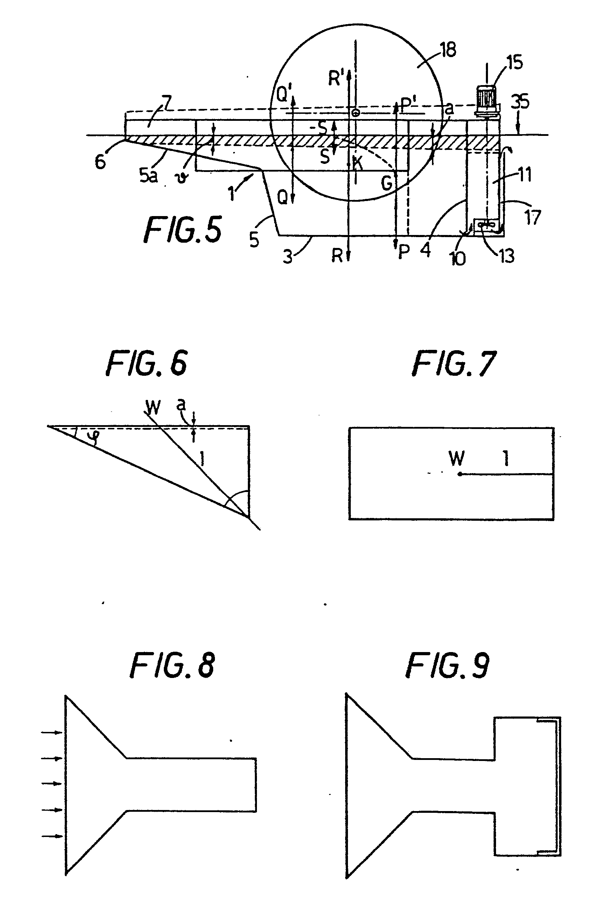

For such a purpose reference is made to the apparatus diagram shown in Figure 5, in which are indicated the main forces, which consist of the resultant Q of the tare weight of the apparatus and of the resultant P of the water weight contained therein, this weight being variable, i.e. it can pass from a maximum, if the propeller 13 is stationary, to values which decrease, as the number of revolutions of the propeller 13 increases.

For the purpose that the apparatus can float, it is necessary that P and Q are counterbalanced by buoyancies P' and Q' of an opposite sign.

As can be seen in Figure 5, the apparatus has been planned in such a manner that the application point of the vector P must be displaced backward as far as possible with respect to the application point of the vector Q.

That will have as a result that when the propeller 13 is stationary and P is maximum in this condition the apparatus must remain in a substantially horizontal buoyancy condition with the sill 6 placed nearly at the level of the liquid surface.

When the propeller 13 goes into action, under the effect of the decrease of the inner water head of the apparatus, the value of the vector P will decrease and the apparatus will have to find a new condition of hydrostatic equilibrium. At "a" is indicated the amount of the mean value of the difference in height between the starting head of the water contained in the channel 2, 2a and the final one when the apparatus will be lightened by the weight S of the water which formaly occupied the layer "a".

Therefore, the apparatus will rotate forwards or backwards through an angle φ about the pitching axis according to the application point of the vector R which is the resultant of the weights P and Q.

The main task of the planning will be therefore, that it is necessary that the application point of the vector S be displaced as far as possible behind the application line of vector R.

I.e. in practice one desires to obtain a floating system which can be self-balancing, by making the delivery of the weir flow equal to the delivery of the propeller 13. It is therefore necessary that the weir sill is immersed more and more, as a direct function of the increase of the delivery of the discharged water flow, which, in turn is a direct function of the rotation speed of the propeller 13. In order to obtain that, it is necessary to duly plan the configuration of the channel 2, 2a and of the chamber 11, which are designed to be filled up by water, while the floating hulls 1 must have their center of hydrostatic thrust positioned in a same transversal plane which passes through the center of gravity of the empty structure and which must have the shortest possible longitudinal development. As far as the channel is concerned, the simplest solution would be the solution of constructing said channel with constant longitudinal sections of the form of a rectangular triangle, as shown in Figure 6 and 7 and with a small as possible inclination angle φ of the bottom. In this case in fact the center of gravity W of the surface layer of water contained in said type of simplified channel, will be displaced backwards with the greatest possible rapidity as soon as the difference of height "a" increases. To this simple embodiment of the channel (Figure 6 and 7) some improvements can be however applied, which are present in the embodiment till now described. In order to obtain an increase of the suction force exerted on the oil layer to be collected, it is necessary to increase as much as possible the amplitude of the weir sill 6 in the front thereof.

In fact at a given delivery from the propeller 13, the suction results to be broader and the overflowing liquid head to be smaller, the broader the development of the weir sill. The simplified channel shown in Figures 6 and 7 should have in plan the configuration shown in Figure 8. But such a configuration would displace for too much forwards the center of gravity of the uppermost water layers contained into the channel with harmful consequences, and that would cause, at least at the beginning too considerable a displacement forwards of the application point of the vector S.

Therefore, in order to balance the increased amplitude of the front portion of the channel, due to the provision of an enlarged weir sill 6, it was thought therefore to enlarge also the channel portion which is positioned behind the floating bodies 1 (Figure 9).

It is also to be noted that on a theoretical point of view it is better that the angle φ, which corresponds to the chosen maximum value of the pitching angle, be as small as possible. Practical tests which are carried out have proved that the optimal value of φ is of about 15°—20°.

It has also been found advantageous to modify the constant gradient of the angle φ of the bottom after the first length 2 of the channel, by providing an inclining bottom so as to form a calm chamber 2a which is deeper, for the purpose of having a water mass of a greater volume which allows a better dampening of the polluted water flow entering the first length 2 of the channel through the weir sill 6 and which reaches the chamber 2a with the best possibility of containing the recovered floating oils.

With this object in view an installation of a plurality of vertical parallel baffles 8 are provided which co-operate in the braking of the speed of the water entering the basin 2a, as well as in the hampering of the travel of the collected oil drops.

It is to be noted that in the preferred embodiment which has been illustrated, provision has been made to have a rear chamber 11 which enlarges laterally, extending behind the floating bodies and which, besides of constituting the suction chamber of the propeller, serves also to displace in a backward direction the center of gravity of the water which is contained between the floating bodies 1. Of course, the chamber 11 could also have reduced sizes, the smaller volume of said chamber being compensated by enlarging the rear portion of the calm basin 2a behind the floating bodies 1. Theoretically the same purpose could be attained by increasing the length of the calm basin, but this solution is not convenient in practice, since the length of the apparatus would be increased too much.

## Claims

1. An apparatus for the recovery of fluid substances floating on water surfaces or the like consisting of two floating bodies (1) having a symmetrical configuration with respect to the longitudinal, vertical center plane of the apparatus and which are spaced apart from one another and are connected to longitudinal and transverse vertical walls (4, 4a) as well as to inclined and horizontal walls (5, 5a, 3) which form a longitudinal channel, this longitudinal channel beginning at its front part with a weir sill (6) and being closed at the bottom and at the rear part thereof, the rear portion of the channel being deeper (than the preceding one), so as to form a calm basin closed at the rear end by a transverse wall (4), and a device (9, 25) inside said basin for collecting the floating substance, characterised in that behind the transverse wall a rear chamber (11) is arranged which communicates with said calm basin through an opening (10) arranged in the lowest portion of said transversal wall (4), while at the bottom (31) of the chamber (11) a conduit (12) opens in which operates a propeller (13) driven by an adjustable speed motor (15), preferably of hydraulic or pneumatic type, the outlet end of the conduit (12) being connected to a discharge conduit (17), the apparatus being so constructed that the center of gravity of its empty weight is placed before the center of gravity of the water mass which can be contained in said channel and in the chamber (11) when the propeller is stationary, and the floating bodies have their buoyancy centers placed in the transverse plane passing through the center of gravity of the apparatus when in empty condition and wherein the configuration of said channel and of the rear chamber (11) is such that as the pump (13) starts up, the center of gravity of the water layer which is removed, in order to create a difference in level between the outer water head and the inner head, is located behind the center of gravity of the apparatus at its maximum weight, so that the removal of the water layer is able to cause a swinging movement of the floating apparatus around the pitching axis of this latter in order to lower the sill (6) until the desired depth.

2. An apparatus according to the claim 1, wherein said channel beginning from the sill (6), comprises a first section (2) having a slightly inclined bottom, according to the maximum pitching angle which one will yield to the apparatus, and a second section (2a) formed by a front wall (5), and a bottom, a rear wall and side walls (3, 4, 4a), which forms said broad calm basin, while the weir sill (6) preferably has a width greater than the inner width of the channel, said enlarged portion of the first section of the channel being provided laterally with containment side walls (7).

3. An apparatus according to claim 1, wherein into the calm basin vertical partitions (8) are mounted adapted to dampen the water movements and to promote the ascent of the oil drops.

4. An apparatus according to claim 1, wherein the configuration of the channel can be simplified in such a way that the channel takes the shape of an element having parallel longitudinal walls which are coplanar with the inner longitudinal walls of the floating bodies, and a bottom of a constant slope of an angle equal to the pitching angle which may be foreseen and which begins from the sill (6) and which reaches the lower end of the rear wall of the basin.

## Patentansprüche

1. Gerät zur Rückgewinnung von auf einer Wasseroberfläche oder ähnlichem schwimmenden, eine symmetrische Ausbildung gegenüber der senkrechten, zentralen Längsebene des Gerätes aufweisenden Rümpfen (1), die im Abstand voneinander liegen und mit senkrechten Längs- und Querwänden (4, 4a) sowie mit schrägen und horizontalen Wänden (5, 5a, 3) verbunden sind, die einen Längskanal bilden, der an seinem Vorderteil ein Überfallwehr (6) aufweist und an seinem Boden und an seiner Rückwand verschlossen ist, wobei die Rückseite des Kanalbodens tiefer als die Vorderseite ist, sodass ein an·der Rückseite von einer Querwand (4) verschlossenes Verzögerungsbecken gebildet wird, und aus einer innerhalb des Beckens angeordneten Einrichtung (9, 25) zur Aufnahme der schwimmenden Flüssigkeit, dadurch gekennzeichnet, dass hinter der Querwand eine rückwärtige, mit dem Verzögerungsbecken über eine in dem niedrigsten Teil der Querwand (4) vorgesehenen Öffnung (10) kommunizierende Kammer (11) angeordnet ist, dass in den Boden (31) der Kammer (11) eine Leitung (12) mündet, in der eine von einem mit veränderlicher Drehzahl betätigten, vorzugweise hydraulischen oder pneumatischen Motor (15) angetriebene Schraube (13) läuft, wobei das Austrittsende der Leitung (12) mit einer Auslassleitung (17) verbunden ist, dass das Gerät derart ausgebildet ist, dass sich der Schwerpunkt des leeren Gerätes vor dem Schwerpunkt der Wassermasse befindet, die in dem Kanal und in der Kammer (11) enthalten werden kann, wenn die Schraube stillgesetzt wird, das sich die Verdrängungsschwerpunkte der schwimmenden Rümpfe in der durch den Schwerpunkt des leeren Gerätes durchgehenden Querebene befinden, dass der Kanal und die rückwärtige Kammer (11) derart ausgebildet sind, dass beim Antrieb der Pumpe (13) der Schwerpunkt der Wasserschicht, die zur Bestimmung eines Pegelunterschiedes zwischen den äusseren und inneren Wasserstandhöhen entfernt wird, hinter dem Schwerpunkt des vollgemachten Gerätes sich befindet, so dass die Entfernung der Wasserschicht die Schwingung des schwimmenden Gerätes um die Nickachse des letzteren zum Absenken der Überfallwehres (6) bis zur gewünschten Tiefe verursacht.

2. Gerät nach Anspruch 1, dadurch gekennzeichnet, dass der Kanal nach seinem vorderen Wehr (6) eine erste Strecke (2) mit etwa geneigtem Boden je nach dem gestattenen höchsten Nickwinkel des Gerätes und eine zweite eine Vorderwand (5), einen Boden, eine Rückwand und Seitenwände (3 bzw. 4 bzw. 4a) aufweisende, eine weites Verzögerungsbecken bildende Strecke (2a) aufweist, und dass das Überfallwehr (6) vorzugsweise eine grössere Breite als die innere Breite des Kanals hat, wobei das erweiterte Teil der ersten Kanalstrecke mit seitlichen Leitwänden versehen ist.

3. Gerät nach Anspruch 1, dadurch gekennzeichnet, dass innerhalb des Verzögerungsbeckens senkrechte Zwischenwände (8) angeordnet sind, die die Wasserbewegungen zu dämpfen geeignet sind und den Anstieg der Öltropfen begünstigen.

4. Gerät nach Anspruch 1, dadurch gekennzeichnet, dass die Ausbildung des Kanals derart vereinfacht werden kann, dass der Kanal parallele, mit den inneren Längswänden der schwimmenden Rümpfe koplanare Längswände und einen eine aus dem Wehr (6) bis zum unteren Ende der Rückwand des Beckens verlaufende Neigung mit gleichem Winkel wie dem vorgesehen Nickwinkel aufweisenden Boden besitzt.

**Revendications**

1. Dispositif pour la récupération de substances liquides flottant sur des surfaces d'eau ou similaire et qui comporte deux corps flottants (1) ayant une configuration symétrique par rapport au plan longitudinal, vertical de symétrie du dispositif, qui sont écartés l'un de l'autre et qui sont reliés à des parois longitudinaux, verticaux (4, 4a), ainsi que à des parois horizontaux, inclinées (5, 5a, 3) qui forment un canal longitudinal, ce canal longitudinal comportant à partir de sa partie frontale, un seuil de déversoir (6) et étant fermée le long du fond et de sa partie postérieure, cette partie postérieure du canal étant plus profonde que la partie qui la précède, de manière à former un bassin de calme qui est fermé à sa partie postérieure par une paroi transversale (4) et un dispositif (9, 25) dans ce bassin pour la récupération de substances flottantes, caracterisè en ceque derrière de la paroi transversale est prévue une chambre postérieure (11) communiquant avec ce bassin de calme à l'aide d'une ouverture (10) arrangée dans la partie la plus basse de cette paroi transversale (4), tandis que dans le fond (31) de la chambre (11) débouque un conduit (12), dans lequel travaille une hélice (13) actionnée par un moteur à vitesse réglable (15), préférablement d'un type hydraulique ou pneumatique, l'extrémité de sortie du conduit (12) étant reliée à un conduit de dégorgement (17), le dispositif étant construit de manière que le centre de gravité de son poids à vide soit placé devant le centre de gravité de la masse d'eau qui peut être contenue dans le dit canal et dans la chambre (11), lorsque l'helice est arrêtée, et que les corps flottants aient leurs centres de flottabilité placés dans le plan transversal qui passe par le centre de gravité du dispositif en condition de vide, et que la configuration du dit canal et de la chambre postérieure (11) soit telle que, lorsque la pompe (13) va démarrer, le centre de gravité de la couche d'eau qui est éloignée, afin de créer une différence de niveau entre l'hauteur extérieure de l'eau et l'haunteur intérieure, soit placé derrière le centre de gravité du dispositif, à son poids le plus élevé, de manière que l'eloignement de la couche d'eau est apte à produire un mouvement d'oscillation du dispositif flottant, autour de l'axe de tangage de ceci, afin de faire le seuil (6) jusqu'à la profondeur désirée.

2. Dispositif selon la revendication 1, dans lequel le dit canal, à partir du seuil (6), comporte une première section (2) ayant un fond légèrement incliné selon l'angle tanglage le plus élevé, qu'on veut donner au dispositif, et un deuxième section (2a) formée par une paroi frontale (5) et un fond, une paroi postérieure et des parois latéraux (3, 4, 4a) qui forment ce large bassin de calme, tandis que le seuil de déversoir (6) a, de préférence, une largeur plus grande que la largeur intérieure du canal, cette partie élargie de la première section du canal étant munie latéralement de parois latéraux aptes à contenir l'eau.

3. Dispositif selon la revendication 1, dans lequel des cloisons verticaux (8) sont montés dans le bassin de calme, aptes à amortir le mouvements de l'eau et à favoriser la remontée des gouttes d'huile.

4. Dispositif selon la revendication 1, dans lequel on peut simplifier la configuration du canal de manière que la canal prends la forme d'un élément ayant des parois parallèles longitudinaux, qui sont coplanaires des paroi longitudinaux des corps flottants, et un fond ayant un angle de pente constante égal à l'angle de tangage qui peut être prévu, et qui commence à partir du seuil (6) et atteint la paroi postérieurs du bassin.

FIG.1

FIG.2

*FIG. 3*

*FIG. 4*

**FIG.5**

**FIG. 6**

**FIG.7**

**FIG.8**

**FIG.9**